**Europäisches Patentamt**

**European Patent Office**

**Office européen des brevets**

(19)

(11) Veröffentlichungsnummer: **0 207 239**
**B1**

(12) # EUROPÄISCHE PATENTSCHRIFT

(45) Veröffentlichungstag der Patentschrift:
25.10.89

(51) Int. Cl.⁴: **B 23 D 47/04**

(21) Anmeldenummer: **86105262.9**

(22) Anmeldetag: **16.04.86**

(54) **Werkstückeinspannvorrichtung an einer Kreissägemaschine.**

(30) Priorität: **19.04.85 DE 3514169**

(43) Veröffentlichungstag der Anmeldung:
**07.01.87 Patentblatt 87/2**

(45) Bekanntmachung des Hinweises auf die Patenterteilung:
**25.10.89 Patentblatt 89/43**

(84) Benannte Vertragsstaaten:
**AT BE CH FR GB IT LI LU NL SE**

(56) Entgegenhaltungen:
**DE-A-3 306 743**
**DE-A-3 418 801**
**DE-C-878 457**
**DE-C-3 409 731**
**FR-A-2 051 946**
**FR-A-2 540 030**

(73) Patentinhaber: **Chr. Eisele Maschinenfabrik GmbH & Co. KG., Nürtinger Strasse 9 - 15, D-7316 Köngen (DE)**

(72) Erfinder: **Holder, Kurt, Kiesweg 24, D-7316 Köngen (DE)**

(74) Vertreter: **Hoeger, Stellrecht & Partner, Uhlandstrasse 14 c, D-7000 Stuttgart 1 (DE)**

LIBER, STOCKHOLM 1989

EP 0 207 239 B1

## Beschreibung

Die Erfindung betrifft eine Sägemaschine mit einem Maschinengestell, mit einer geschlitzten, um eine vertikale Achse drehbaren, der Aufnahme eines zu sägenden Werkstückes dienenden Drehplatte, mit einem beim Sägen von unten nach oben durch den Schlitz der Drehplatte hindurchführbaren, motorgetriebenen Kreissägeblatt mit horizontaler Drehachse, mit einer gestellfesten, die Drehplatte überragenden Spannbrücke und mit einer von der Spannbrücke getragenen Spanneinrichtung zum Festspannen des Werkstückes auf der Drehplatte.

Bei bekannten Sägemaschinen dieser Art wird zum Festspannen des Werkstückes ein massiver Klotz aus Metall oder Holz verwendet, der zwischen das Werkstück und die lediglich vertikal verstellbare Spanneinrichtung eingesetzt wird. Durch vertikales Verstellen der Spanneinrichtung wird dann das Werkstück von dem Klotz gegen die Drehplatte gespannt. Da der Hub des Sägeblattes nach oben in der Regel nicht begrenzt ist, schneidet das Sägeblatt, nachdem es das Werkstück durchschnitten hat, in den Klotz ein, der daher nach mehreren Sägeschnitten durch einen neuen Klotz ersetzt werden muß. Andernfalls ist die gewünschte, hohe Spanngenauigkeit meist nicht erzielbar.

Es ist Aufgabe der Erfindung, eine gattungsgemäße Sägemaschine so auszubilden, daß die Spanneinrichtung mit wenigen Handgriffen rasch und genau auf verschiedene Werkstückgrößen und Schnittwinkel einstellbar ist, ohne daß dabei die Gefahr einer Beschädigung der Spanneinrichtung während des Sägens entsteht.

Die Aufgabe wird erfindungsgemäß dadurch gelöst, daß die Spanneinrichtung eine auf das Werkstück aufsetzbare, vertikal auf- und abbewegliche Spannbacke umfaßt, daß die Spannbacke um die Drehachse der Drehplatte verdrehbar ist, und daß die Spannbacke senkrecht zu ihrer Drehachse in einer Gleitführung verschiebbar ist.

Die nachstehende Beschreibung einer bevorzugten Ausführungsform der Erfindung dient im Zusammenhang mit beiliegender Zeichnung der weiteren Erläuterung. Es zeigen:

Fig. 1 eine schaubildliche Ansicht einer Kreissägemaschine mit einem von unten her in ein Werkstück einführbaren Sägeblatt;

Fig. 2 eine teilweise geschnittene Seitenansicht der Kreissägemaschine;

Fig. 3 eine Ansicht der Maschine in Richtung des Pfeiles A in Fig. 2;

Fig. 4 eine vergrößerte Schnittansicht entlang der Linie 4 - 4 in Fig. 2 und

Fig. 5 eine vergrößerte Teilschnittansicht entlang der Linie 5 - 5 in Fig. 3.

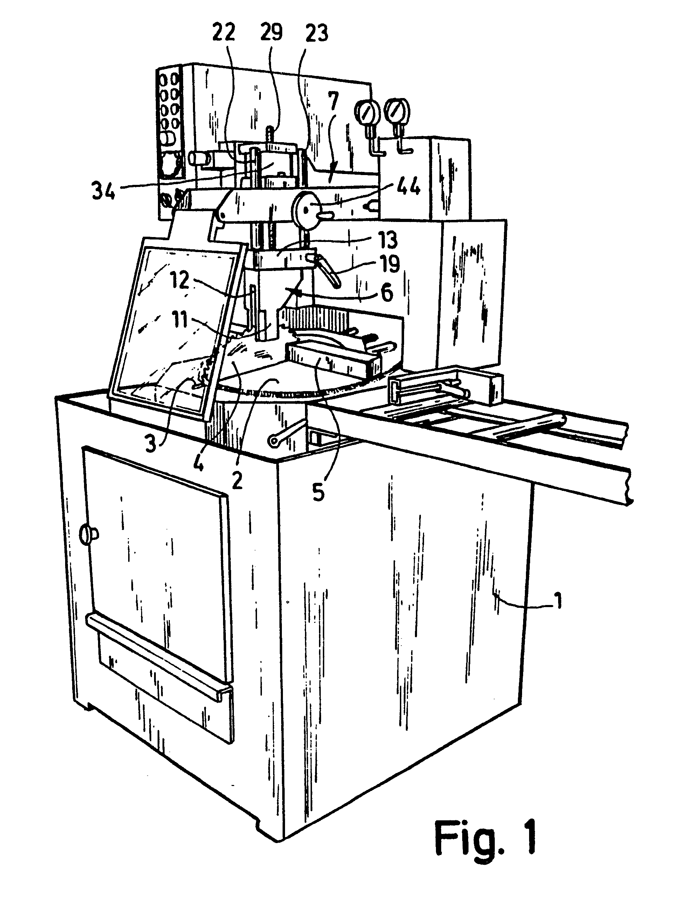

Die in Fig. 1 schaubildlich dargestellte Sägemaschine umfaßt ein blockförmiges Maschinengestell 1, in dem in an sich bekannter Weise eine als Arbeitstisch dienende Drehplatte 2 um eine vertikale Achse drehbar gelagert ist. Die Drehplatte 2 weist einen diametralen Schlitz 3 auf, durch den hindurch ein Kreissägeblatt 4 von unten nach oben hindurchführbar ist. Das um eine horizontal verlaufende Drehachse rotierende Sägeblatt 4 wird von einem nicht dargestellten Elektromotor angetrieben. Eine ebenfalls an sich bekannte und daher nicht eigens dargestellte Hebe- und Senkeinrichtung für das Kreissägeblatt 4 ist mit der Drehplatte 2 zu einer um die erwähnte vertikale Achse drehbaren Einheit verbunden.

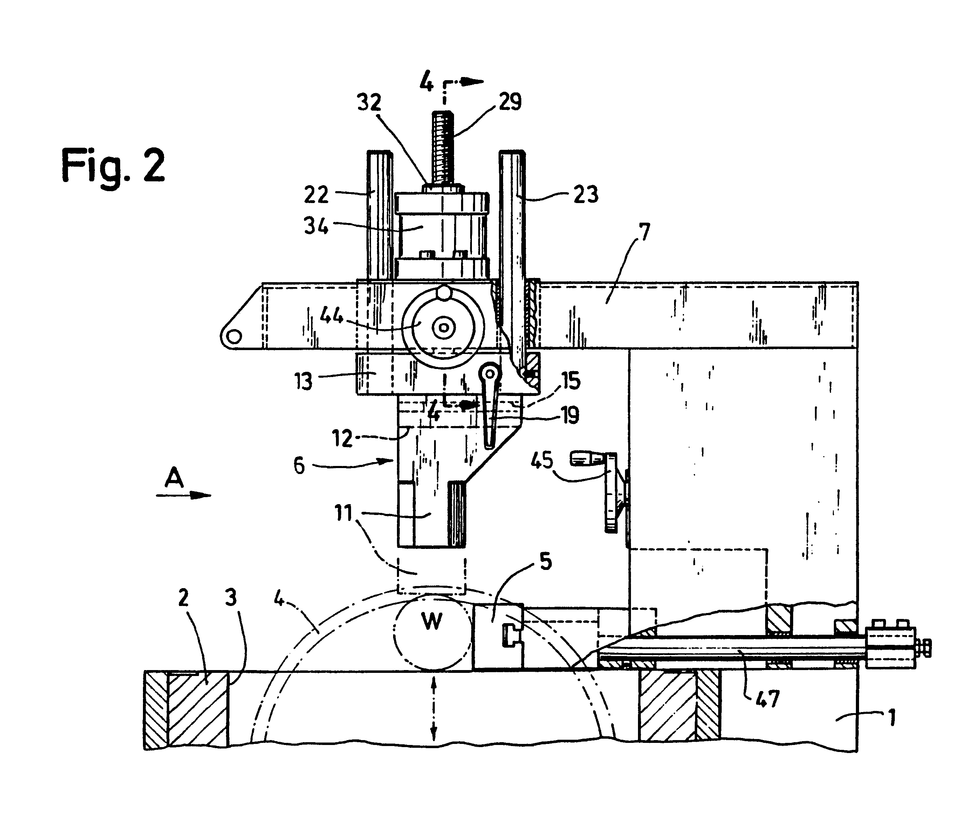

Ein zu zersägendes Werkstück W (Fig. 2) wird in bekannter Weise auf die Drehplatte 2 gelegt und in Anlage mit einem über der Drehplatte befindlichen Anschlag 5 gebracht. In dieser Lage wird das Werkstück von einer vertikal verstellbaren Spanneinrichtung 6 auf der Drehplatte 2 festgeklemmt. Die Spanneinrichtung 6 ist an einer die Drehplatte 2 überragenden Spannbrücke 7 vertikal verstellbar gelagert.

Das auf diese Weise festgehaltene Werkstück kann nun durch Verschieben des Sägeblattes 4 von unten nach oben geschnitten werden, wobei die Schnitte senkrecht oder in einem von 90° verschiedenen Winkel zur Werkstückachse geführt werden können.

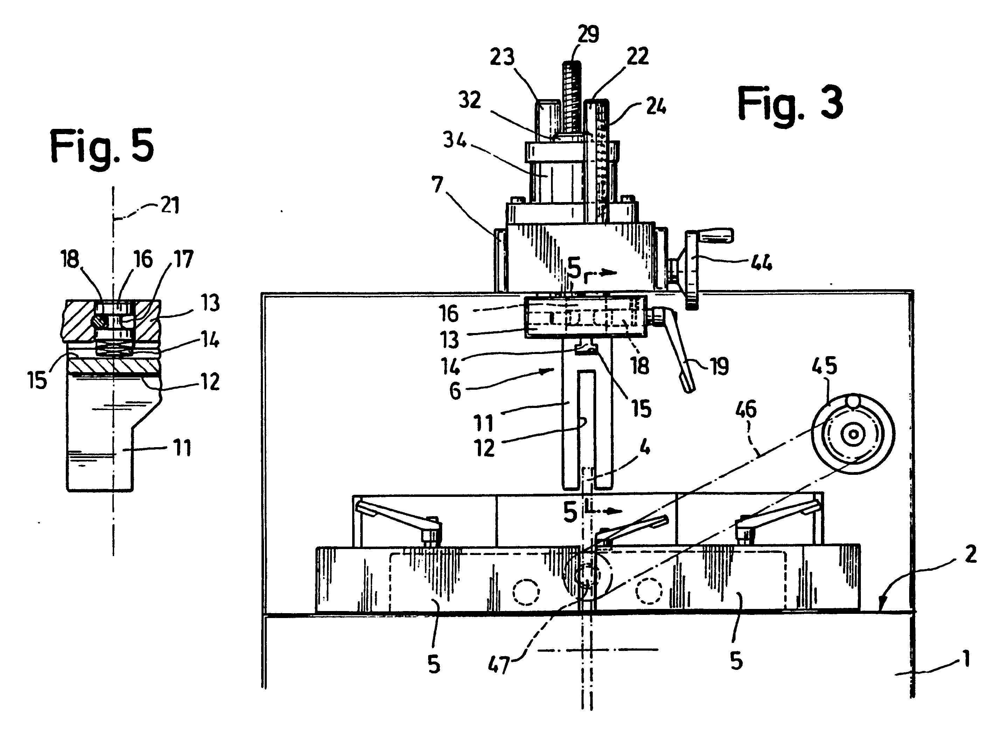

Wie insbesondere aus Fig. 2 und 3 hervorgeht, umfaßt die Spanneinrichtung 6 als wesentlichen Bestandteil eine auf das Werkstück W aufsetzbare, vertikal auf- und abbewegliche Spannbacke 11, die gabelförmig ausgebildet ist und einen vertikalen Schlitz für den Eintritt des Kreissägeblatts 4 aufweist. Die Länge oder Höhe dieses Schlitzes ist mindestens gleich der maximalen Hubhöhe des Kreissägeblattes, so daß auch dann, wenn kein oder nur ein sehr dünnes Werkstück gesägt wird, die Spannbacke 11 mit ihren freien Enden also praktisch unmittelbar auf der Drehplatte 2 aufruht, die Spanneinrichtung 6 vom Sägeblatt 4 nicht beschädigt werden kann.

Von einer über der Spannbacke 11 angeordneten Führungsplatte 13, die ebenfalls ein Teil der Spanneinrichtung 6 ist, steht nach unten ein T-förmiger Führungszapfen 14 ab, der in eine komplementäre, T-förmige Nut 15 (Fig. 5) der Spannbacke 11 eingreift. Auf diese Weise bilden der Zapfen 14 und die Nut 15 eine Gleitführung, mittels der die Spannbacke 11 an der Unterseite der Führungsplatte 11 auf einer geradlinigen Bahn hin- und herverschieblich ist, wobei diese Bahn in Fig. 2 und 5 in der Zeichnungsebene und in Fig. 3 senkrecht zur Zeichnungsebene verläuft.

Mit dem Führungszapfen 14 ist einstückig (vergl. Fig. 5) ein kreiszylindrischer Drehzapfen 16 verbunden, der durch eine ringförmige Nut 17 das Profil eines Doppel-T-Profils erhalten hat. In die Ringnut 17 greift eine in der Führungsplatte 13 gelagerte Exzenterwelle 18 ein, die durch einen Handgriff 19 verdrehbar ist. Durch entsorechende Verstellung der Exzenterwelle 18 mittels des Handgriffes 19 kann die Spannbacke 11 an der Unterseite der Führungsplatte 13 festgeklemmt werden.

Der Drehzapfen 16 ist so in der horizontal

unverschieblich an der Spannbrücke 7 gehaltenen Führungsplatte gelagert, daß seine Drehachse 21 immer mit der vertikalen Drehachse der Drehplatte 2 genau zusammenfällt. Somit ist sichergestellt, daß die Spannbacke 11 in Abhängigkeit von der Winkellage der Drehplatte 2 immer so eingestellt werden kann, daß das Sägeblatt 4 genau in den Schlitz 12 der Spannbacke 11 berührungslos eingreift, und zwar auch dann, wenn die Spannbacke 11 in ihrer vom Führungszapfen 14 und der Nut 15 gebildeten Gleitführung aus einer bestimmten Null-Lage heraus verschoben ist. Somit kann die Spannbacke 11 in jeder Lage des am Anschlag 5 anliegenden Werkstückes auf dieses weitgehend zentral aufgesetzt werden, so daß eine präzise Spannung möglich ist, wobei gleichzeitig der Schlitz 12 der Spannbacke 11 immer so ausrichtbar ist, daß das Sägeblatt 4 berührungslos in ihn eindringen kann. Die Verschieberichtung der Spannbacke 11 an der Führungsplatte 13 mittels der erwähnten Gleitführung verläuft senkrecht zur Drehachse der Spannbacke 11 und der Drehplatte 2.

Die Führungsplatte 13 und damit die Spannbacke 11 sind mittels starr von der Platte 13 abstehender Führungsstangen 22, 23 vertikal auf- und abverschieblich in der Spannbrücke 7 gelagert. Die Führungsstange 22 trägt dabei eine Skale 24, an welcher die jeweilige Einstellhöhe ablesbar ist.

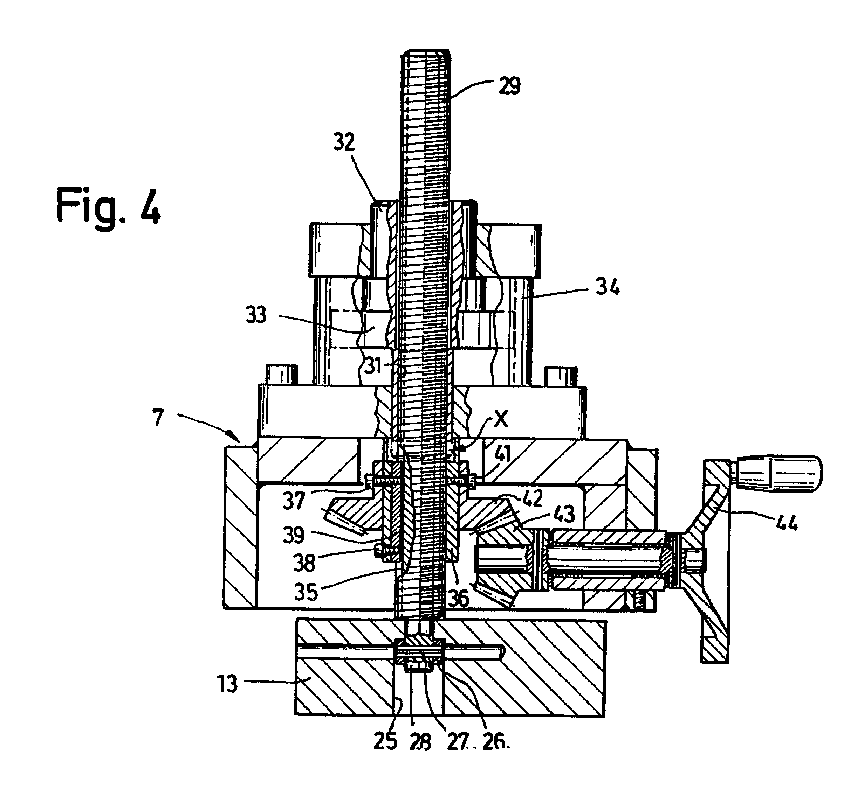

Wie insbesondere aus Fig. 4 hervorgeht, ist die Führungsplatte 13 mittels einer in sie eingearbeiteten Vertiefung 25, eines in die Vertiefung 25 passenden und an derem Grund anliegenden Ringes 26 und eines durchgehenden Splintes 27 am unteren Ende 28 einer Schraubspindel 29 drehbar gelagert. Wird die Schraubspindel 29 auf- oder abverdreht, so bewegt sich die von den Führungsstangen 22, 23 unverdrehbar geführte Führungsplatte 13 nach oben oder unten. Die Schraubspindel 29 greift mit ihrem Außengewinde in einen mit Innengewinde versehenen Abschnitt 31 einer hohlen Kolbenstange 32 ein, die mit einem Kolben 33 fest verbunden ist. Der Kolben 33 und damit die Kolbenstange 32 sind in einem Druckmittelzylinder 34 in an sich bekannter Weise verschieblich, wobei die Schraubspindel und damit die Führungsplatte 13 mitgenommen werden. Der Kolben 33 kann im Zylinder 34 bei entsprechender Druckmitteleinspeisung (Druckluft oder Hydrauliköl) nur einen sehr begrenzten Hub von z. B. 8 mm ausführen. Dieser maximale Hub ist in Fig. 4 strichpunktiert durch den Pfeil X angedeutet.

Die Schraubspindel 29 weist an ihrer Außenseite (in Fig. 4 links gelegen) eine achsparallele Längsnut 35 auf. Im Bereich unterhalb des in der Kolbenstange 32 vorgesehenen Gewindeabschnitts 31 ist die Schraubspindel lose von einer zylindrischen Buchse 36 umgeben. Von der Innenwand dieser Buchse steht nach einwärts und von Schrauben 37, 38 gehalten eine Feder 39 in die Längsnut 35 vor. Auf diese Weise besteht zwischen der Buchse 36 und der Schraubspindel 29 eine drehschlüssige Verbindung, wobei sich aber die Schraubspindel 29 axial relativ zur Buchse 36 verschieben kann. Mit der Buchse 36 ist durch die Schraube 37 und weitere Schrauben 41 ein Kegelzahnrad 42 drehfest verbunden, das mit einem weiteren Kegelzahnrad 43 kämmt. Das Kegelzahnrad 43 kann mittels eines in der Spannbrücke 7 drehend gelagerten Handrades 44 in Umlauf versetzt werden, wobei über das Kegelzahnrad 42 die Buchse 36 mitgenommen wird. Hierdurch wird über die Feder 39 die Spindel 29 in Drehung versetzt, die sich gleichzeitig wegen der Längsnut 35 zur Kolbenstange 32 relativ verschiebt. Da der die Kolbenstange 32 enthaltende Druckmittelzylinder 34 ortsfest auf der Spannbrücke 7 gelagert ist, kann somit die mit der Schraubspindel 29 drehbar verbundene Führungsplatte 13 über eine längere Wegstrecke nach abwärts und aufwärts verschoben werden. Diese Verschiebung der Führungsplatte 13 dient der Grobeinstellung der Spannbacke 11 relativ zu einem zu sägenden Werkzeug. Diese Grobeinstellung erfolgt vorzugsweise soweit, daß die Spannbacke 11 mit ihren freien, gabelförmigen Enden lose auf dem Werkstück aufsitzt. Anschließend wird zum eigentlichen Aufspannen des Werkstücks W auf die Drehplatte 2 der Druckmittelzylinder 34 betätigt, so daß dessen Kolbenstange 32 um die vorerwähnte kleine Wegstrecke X mit großer Kraft nach unten gedrück wird. Da über die Schraubspindel 29 und die Führungsplatte 13 auch die Spannbacke 11 fest mit der Kolbenstange 32 verbunden ist, wird somit die Spannbacke mit großem Druck auf das Werkstück W gepreßt und hält dieses in der gewünschten Lage auf der Drehplatte 2 fest.

In Fig. 2 und 3 ist ein weiteres Handrad 45 dargestellt, das unter Vermittlung einer Kette 46 der Verstellung einer weiteren, horizontal im Maschinengestell gelagerten Schraubspindel 47 dient. Mitdieser Schraubspindel 47 kann der (ebenfalls für den Durchtritt des Sägeblatts 4 geschlitzte) Anschlag 5 über der Drehplatte 2 passend eingestellt werden.

## Patentansprüche

1. Sägemaschine mit einem Maschinengestell (1), mit einer geschlitzten, um eine vertikale Achse (21) drehbaren, der Aufnahme eines zu sägenden Werkstückes (W) dienenden Drehplatte (2), mit einem beim Sägen von unten nach oben durch den Schlitz (3) der Drehplatte hindurchführbarem, motorgetriebenen Kreissägeblatt (4) mit horizontaler Drehachse, mit einer gestellfesten, die Drehplatte überragenden Spannbrücke (17) und mit einer von der Spannbrücke getragenen Spanneinrichtung (6) zum Festspannen des Werkstückes auf der Drehplatte,
dadurch gekennzeichnet, daß die Spanneinrichtung (6) eine auf das Werkstück (W) aufsetzbare, vertikal auf- und abbewegbare

Spannbacke (11) umfaßt, daß die Spannbacke um die Drehachse (21) der Drehplatte (2) verdrehbar ist, und daß die Spannbacke senkrecht zu ihrer Drehachse in einer Gleitführung (14, 15) verschiebbar ist.

2. Sägemaschine nach Anspruch 1 dadurch gekennzeichnet, daß die Spannbacke (11) mittels eines Drehzapfens (16) an der ünterseite einer vertikal verstellbaren Führungsplatte (13) drehbar gelagert und der Drehzapfen gleichzeitig Führungszapfen (14) für die in der Spannbacke ausgebildete Gleitführung ist und hierzu in eine Führungsnut (15) der Spannbacke eingreift.

3. Sägemaschine nach Anspruch 2, dadurch gekennzeichnet, daß die Spannbacke (11) durch einen Exzenterverschluß (18, 19) an der Führungsplatte (13) feststellbar ist.

4. Sägemaschine nach Anspruch 1, dadurch gekennzeichnet, daß die gabelförmig ausgebildete Spannbacke (11) einen vertikalen Schlitz (12) für den Eintritt des Kreissägeblatts (4) aufweist, und die Länge des Schlitzes mindestens gleich der maximalen Hubhöhe des Sägeblatts ist.

5. Sägemaschine nach Anspruch 1, dadurch gekennzeichnet, daß die Spannbacke (11) durch einen Schraubspindelantrieb (29, 44) relativ zum Werkstück (W) voreinstellbar und durch einen Druckmittelzylinder (34) auf das Werkstück aufpreßbar ist.

6. Sägemaschine nach Anspruch 5, dadurch gekennzeichnet, daß dcr Schraubspindelantrieb (29, 44) und der Druckmittelzylinder (34) an der die Spannbacke (11) tragenden Führungsplatte (13) angreifen.

## Claims

1. Sawing machine with a machine frame (1), with a slotted turntable (2) which is rotatable about a vertical axis (21) and which serves for holding a workpiece (W) to be sawn, with a motor-driven circular saw blade (4) which during the sawing is guidable upwardly from below through the slot (3) of the turntable and which has a horizontal axis of rotation, with a clamping yoke (17) which is fixed firmly to the frame and which projects over the turntable, and with a clamping device (6) which is carried by the clamping yoke, for firmly clamping the workpiece on the turntable, characterised in that the clamping device (6) comprises a clamping jaw (11) which can be placed onto the workpiece (W) and which is movable vertically up and down, that the clamping jaw is rotatable about the rotation axis (21) of the turntable (2), and that the clamping jaw is slidable perpendicularly to its rotation axis, in a sliding guide means (14, 15).

2. Sawing machine according to claim 1, characterised in that the clamping jaw (11) is mounted rotatably by means of a journal (16) on the underside of a vertically adjustable guide plate (13), and the journal is at the same time a guide pin (14) for the sliding guide means which is constructed in the clamping jaw and, for this purpose, engages into a guide groove (15) of the clamping jaw.

3. Sawing machine according to claim 2, characterised in that the clamping jaw (11) can be fixed firmly with the aid of an eccentric locking means (18, 19) on the guide plate (13).

4. Sawing machine according to claim 1, characterised in that the clamping jaw (11), which is of fork-shaped construction, has a vertical slot (12) for the entry of the circular saw blade (4), and the length of the slot is at least equal to the maximum stroke height of the saw blade.

5. Sawing machine according to claim 1, characterised in that the clamping jaw (11) is preadjustable relatively to the workpiece (W) by means of a screw spindle drive (29, 44), and can be pressed onto the workpiece with the aid of a pressure-medium cylinder (34).

6. Sawing machine according to claim 5, characterised in that the screw spindle drive (29, 44) and the pressure-medium cylinder (34) engage on the guide plate (13) which carries the clamping jaw (11).

## Revendications

1. Machine de sciage comprenant un bâti de machine (1), un plateau tournant (2) fendu pouvant tourner autour d'un axe vertical (21) et servant à la réception d'une pièce (W) scier, une lame de scie (4) circulaire à entraînement motorisé ayant un axe de rotation horizontal et pouvant, pour le sciage, être guidée de haut en bas à travers la fente (3) du plateau tournant, une potence porteuse (7) fixée au bâti, surplombant le plateau tournant, et un dispositif de serrage (6) porté par la potence porteuse pour le serrage de la pièce travaillée contre le plateau tournant, caractérisée en ce que le dispositif de serrage (6) comprend une mâchoire de serrage (11) mobile verticalement pour être posée sur la pièce (W), en ce que la mâchoire de serrage peut tourner autour de l'axe de rotation (21) du plateau tournant (2), et en ce que la mâchoire de serrage est mobile en translation dans une glissière (14, 15) perpendiculairement à son axe de rotation.

2. Machine de sciage selon la revendication 1, caractérisée en ce que la mâchoire de serrage (11) est montée pivotante au moyen d'un pivot (16) à la face inférieure d'une plaque de guidage (13) déplaçable verticalement et en ce que le pivot est en même temps un téton de guidage (14) pour la glissière pratiquée dans la mâchoire de serrage et s'engage à cette fin dans une rainure de guidage (15) de la mâchoire de serrage.

3. Machine de sciage selon la revendication 2, caractérisée en ce que la mâchoire de serrage (11) peut être immobilisée sur la plaque de guidage (13) au moyen d'un organe de verrouillage (18, 19) à excentrique.

4. Machine de sciage selon la revendication 1, caractérisée en ce que la mâchoire de serrage (11) à configuration de fourche a une fente verticale (12) pour la pénétration de la lame de scie circulaire (4) et en ce que la longueur de la fente est au moins égale au débatement maximal en hauteur de la lame de scie.

5. Machine de sciage selon la revendication 1, caractérisée en ce que la position de la mâchoire de serrage (11) est préréglable par rapport à la pièce (W) au moyen d'un mécanisme de manoeuvre (29, 44) à arbre fileté et peut être appliquée sur la pièce au moyen d'un vérin (34) à fluide sous pression.

6. Machine de sciage selon la revendication 5, caractérisée en ce que le mécanisme de manoeuvre (29, 44) à arbre fileté et le vérin (34) à fluide sous pression exercent leur action sur la plaque de guidage (13) portant ta mâchoire de serrage (11).

Fig. 1

Fig. 2

Fig. 5

Fig. 3

EP 0 207 239 B1

Fig. 4